# EUROPEAN PATENT APPLICATION

(11) **EP 2 116 861 A2**
(43) Date of publication of application: **11.11.2009**
(21) Application number: 09159557.9
(22) Date of filing: 06.05.2009
(51) Int. Cl.: G01S 1/00

(54) **Navigation apparatus and method of acquiring ephemeris data**

(30) Priority: 07.05.2008 JP 2008121481
(71) Applicant: Sony Corporation, Tokyo 108-0075 (JP)
(72) Inventor: Miyata, Hiromasa, Tokyo 108-0075 (JP)
(74) Representative: Beder, Jens

(57) **Abstract**

A navigation apparatus includes: an acquisition unit for receiving a satellite signal from satellites and demodulates the satellite signal to acquire ephemeris data; a storing unit for storing the ephemeris data; a time measuring unit for measuring a valid time of the ephemeris data from timing of acquisition of the ephemeris data; and a control unit for making the acquisition unit reacquire new ephemeris data before the valid time of the ephemeris data elapses in the time measuring unit.

## Description

### BACKGROUND OF THE INVENTION

### FIELD OF THE INVENTION

The present invention relates to a navigation apparatus and a method of acquiring ephemeris data, and is suitably applicable to a portable navigation device which is easily movable.

### DESCRIPTION OF THE RELATED ART

Heretofore, a portable navigation device (hereinafter, referred to as PND) acquires pieces of data necessary for positioning which are transmitted from at least three global positioning system (GPS) satellites, respectively, and analyzes the data to calculate the current position (latitude, longitude) of a vehicle.

The PND can also acquire and analyze the data necessary for positioning from the three or more GPS satellites to calculate altitude aside from the current position (latitude, longitude) of the vehicle.

The PND displays the current position of the vehicle on a map, searches for a driving route from a place of departure to a destination, and then navigates the user through the driving route up to the destination.

When measuring the current position, the PND needs ephemeris data, which is orbital data on each satellite (including precise position information and time information), from the GPS satellites that are receivable to the PND. The ephemeris data is information that is updated approximately every two hours and has a life of validity of four hours or so after updated.

In such cases that more than four hours have elapsed in a power-off state, the PND therefore needs to reacquire new ephemeris data from each of the GPS satellites. Since the ephemeris data is transmitted from the GPS satellites at cycles of approximately 30 seconds, it is desirable for the PND to secure communication environment such that the ephemeris data can be received continuously for at least 30 seconds.

Nevertheless, while it is desirable for the PND to secure favorable communication environment that allows the continuous reception of the ephemeris data transmitted from the GPS satellites for at least 30 seconds, it is often not possible to secure such favorable communication environment when running or when parking behind a building.

In such cases, since a complete set of ephemeris data from the GPS satellites is not yet ready, the PND reacquires and waits for the complete set of ephemeris data at the next cycle. If not ready again, the PND reacquires and waits for the complete set of ephemeris data at the still next cycle.

In fact, since the PND needs to acquire the complete ephemeris data from each of at least three or more GPS satellites, it sometimes takes several minutes or so for the complete set of ephemeris data from the three or more GPS satellites to get ready.

It follows that when the PND is powered on again after a lapse of more than four hours since the previous power-off, or when in communication environment where GPS satellite waves are not receivable more than four hours, the user will be kept waiting for the current position of the vehicle to be identified for several minutes inconveniently.

Then, there has been proposed a positioning apparatus which calculates the elapsed time since the acquisition of ephemeris data, and issues an alarm sound after a lapse of two hours to prompt the user to perform measurement in a place with favorable wave reception environment before the valid period of the ephemeris data expires, thereby increasing the probability that a position measurement can be performed in a short time (refer to, e.g., Jpn. Pat. Appln. Laid-Open Publication No. 2000-338220).

### SUMMARY OF THE INVENTION

Now, the positioning apparatus described in the foregoing patent document 1 has had the problem of calling the user's attention with an alarm sound and having the user move to a place of favorable reception environment for positioning, which requires troublesome operations of the user.

The present invention has been achieved in view of the foregoing, and is to propose a navigation apparatus and a method of acquiring ephemeris data which can measure the current position accurately in a short time with valid ephemeris data retained constantly, without requiring troublesome operations of the user.

To solve the foregoing problem, an aspect of the present invention includes: receiving a satellite signal from satellites and demodulating the satellite signal to acquire ephemeris data; storing the ephemeris data; measuring a valid time of the ephemeris data from timing of acquisition of the ephemeris data; and reacquiring new ephemeris data before the valid time of the ephemeris data elapses.

This makes it possible to reacquire new ephemeris data automatically before a lapse of the valid time of the ephemeris data so that a hot start can always be made with shortest time required to measure the current position.

According to the present invention, it is possible to reacquire new ephemeris data automatically before a lapse of the valid time of the ephemeris data so that a hot start can always be made with shortest time required to measure the current position. This makes it possible to achieve a navigation apparatus and a method of acquiring ephemeris data which can measure the current position accurately in a short time with valid ephemeris data retained constantly, without requiring troublesome operations of the user.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
FIG. 1 is a schematic perspective view showing general configuration of a PND according to an embodiment of the present invention;
FIG. 2 is a schematic block diagram showing the circuit configuration of the PND according to the embodiment of the present invention;
FIG. 3 is a schematic diagram for explaining the basic concept of positioning using ephemeris data;
FIG. 4 is a schematic diagram for explaining a method of acquiring ephemeris data periodically;
FIG. 5 is a schematic diagram for explaining a method of acquiring ephemeris data repeatedly at predetermined time intervals;
FIG. 6 is a schematic diagram for explaining a method of acquiring ephemeris data repeatedly at decreasing time intervals;
FIG. 7 is a flowchart for explaining the procedure of intermittent operation processing;
FIG. 8 is a schematic diagram for explaining a user's acting time zone; and
FIG. 9 is a schematic diagram for explaining the procedure of scheduling acquisition processing of ephemeris data.

### DETAILED DESCRIPTION OF THE PREFERRED EMBODIMENTS

Hereinafter, an embodiment of the present invention will be described in detail with reference to the drawings.

### (1) Overall Configuration of PND

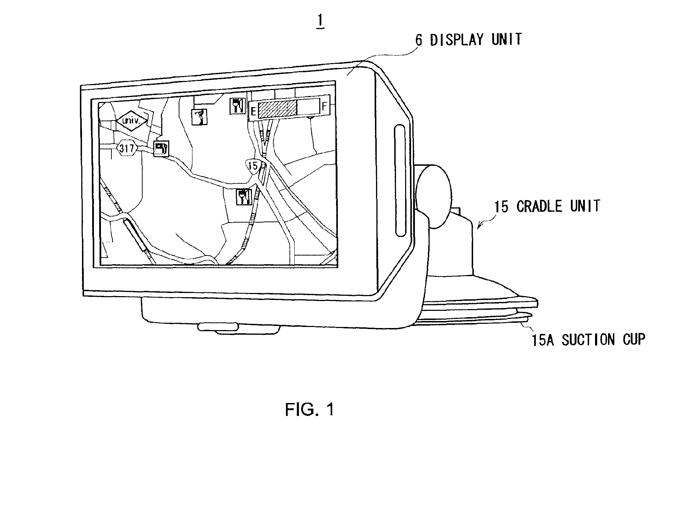

FIG. 1 shows a portable navigation device (hereinafter, referred to as a PND) 1 according to the embodiment of the present invention as a whole. The PND 1 includes a display unit 6 which is equipped with a 4.8-inch liquid crystal display, and a cradle unit 15 which is arranged behind. The PND 1 is detachably mounted on a dashboard of a vehicle via a suction cup 15A of the cradle unit 15.

In general, so-called full navigation systems not only measure the current position by using GPS, but also calculate the running speed of a vehicle based on vehicle speed pulses captured from the vehicle and calculate the traveling direction of the vehicle based on the output of a gyro sensor to estimate the current position of the vehicle when the GPS-based positioning is not available.

In contrast, the PND 1 of this type is configured so as to be detachably mounted on a vehicle via the cradle unit 15. Unlike the full navigation systems, the PND 1 has thus a characteristic of being a navigation system of simplified type that measures the current position by GPS alone without using a vehicle speed pulse or gyro sensor.

### (2) Circuit Configuration of PND

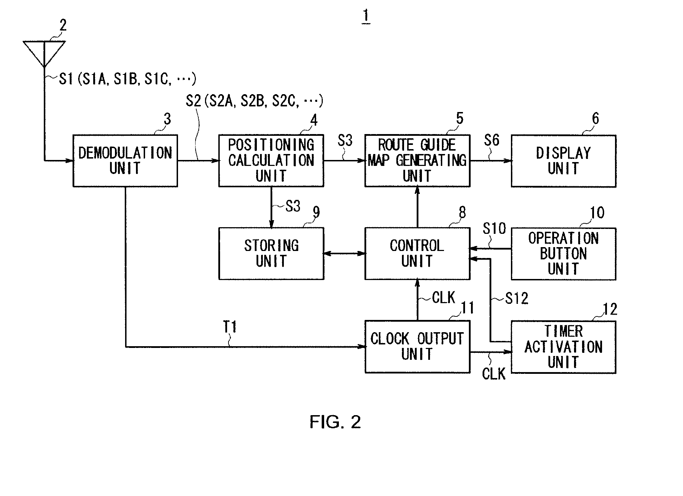

As shown in FIG. 2, the PND 1 has a control unit 8 of microcomputer configuration which is powered by a built-in battery (not show) and exercises centralized control on the entire apparatus according to a basic program. When the PND 1 is mounted on a vehicle via the cradle unit 15, the control unit 8 runs on electric power supplied from the vehicle and exercises centralized control on the entire apparatus.

The control unit 8 of the PND 1 performs various types of navigation processing and various types of processing for acquiring ephemeris data to be described later according to various application programs stored in a storing unit 9 which is composed of a hard disk, a nonvolatile memory, or the like.

In fact, the PND 1 uses a demodulation unit 3 to demodulate satellite signals S1 (S1A, S1B, S1C, ...) that are received from a plurality of GPS satellites (satellite A, satellite B, satellite C, ...) at a GPS antenna 2. The PND 1 thereby restores ephemeris data S2 (S2A, S2B, S2C, ...) and sends the data to a positioning calculation unit 4.

The ephemeris data S2 (S2A, S2B, S2C, ...) contains precise orbital information (parameters) that indicates what orbits the GPS satellites are tracing. For accurate measurement of the vehicle's current position, the ephemeris data needs to be acquired from at least three GPS satellites (satellite A, satellite B, and satellite C). The information is updated approximately every two hours, and has a life of validity of four hours after updated.

Here, being "valid" means that a predetermined level of accuracy is guaranteed when the current position of the vehicle is measured by using the ephemeris data S2 (S2A, S2B, S2C, ...) within the limit of valid time up to four hours after updated.

To put it the other way, it is not possible to guarantee the predetermined level of accuracy when the current position of the vehicle is measured by using the ephemeris data S2 (S2A, S2B, S2C, ...) beyond four hours after updated.

It should be noted that the ephemeris data S2 (S2A, S2B, S2C, ...) is transmitted from the GPS satellites at approximately 50 bps, and it takes approximately 30 seconds or so for the PND 1 to receive the ephemeris data S2 (S2A, S2B, S2C, ...).

If valid ephemeris data S2 (S2A, S2B, S2C, ...) is not retained in the PND 1 at power-on, the PND 1 needs to reacquire new ephemeris data S2 (S2A, S2B, and S2C) at least from three GPS satellites (satellite A, satellite B, and satellite C).

In fact, the PND 1 can acquire ephemeris data S2 (S2A, S2B, S2C, ..., S2H) not only from three GPS satellites (satellite A, satellite B, and satellite C) but from around six to eight GPS satellites (satellite A, satellite B, satellite C, ..., satellite H) in the GPS coverage. Arbitrary three or more out of the pieces of ephemeris data S2 (S2A, S2B, S2C, ...) are put to use.

The demodulation unit 3 extracts time information T1 contained in the ephemeris data S2 (S2A, S2B, S2C, ...) and supplies the time information T1 to a clock output unit 11. The clock output unit 11 corrects the current time to the accurate value based on the time information T1 supplied from the demodulation unit 3, and then supplies the corrected accurate time data CLK to a control unit 9 and a timer activation unit 12.

The positioning calculation unit 4 measures the current position of the vehicle based on the ephemeris data S2 (S2A, S2B, and 2C) and data on the distances from the three GPS satellites (satellite A, satellite B, and satellite C) to the vehicle, and sends the current position data S3 to a route guide map generating unit 5 and the storing unit 9.

The storing unit 9 successively stores and retains the current position data S3 that is delivered each time the positioning calculation unit 4 performs positioning.

The route guide map generating unit 5 searches for a driving route from the vehicle's current position corresponding to the current position data S3 to a destination, according to a route search command S10 which is supplied in response to a user's depressing operation on an operation button unit 10. The operation button unit 10 is composed of various operation buttons and the like arranged on a surface panel (not shown) of the PND 1.

The route guide map generating unit 5 then generates a route guide map including the driving route, and outputs the resulting route guide map data S6 to the display unit 6.

The display unit 6 displays a route guide map image according to the route guide map data S6 so that the user can visually observe the driving route from a current position icon (not shown) to the destination.

Now, based on the time data CLK supplied from the clock output unit 11, the timer activation unit 12 measures the elapsed time (i.e., the valid time of the ephemeris data S2 (S2A, S2B, and S2C)) from a point in time where the acquisition of all the ephemeris data S2 (S2A, S2B, and S2C) from the three GPS satellites (satellite A, satellite B, and satellite C) is completed.

Note that the point where the acquisition of the ephemeris data S2 is completed refers to the timing at which the time information T1 is supplied from the demodulation unit 3 to the clock output unit 11. The timer activation unit 12 measures the valid time of the ephemeris data S2 based on the time data CLK, however, since the difference in time from the point where the time data CLK is supplied to the clock output unit 11 is negligibly small.

### (3) Basic Concept of Positioning Using Ephemeris Data

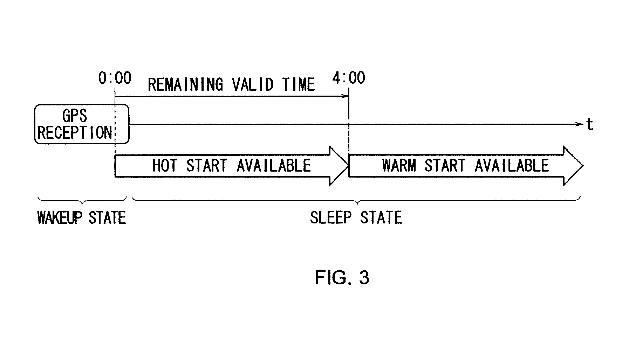

As shown in FIG. 3, while the PND 1 is in operation (hereinafter, referred to as wakeup state), the control unit 8 of the PND 1 demodulates a plurality of satellite signals S1 (S1A, S1B, S1C, ...) received at the GPS antenna 2 by using the demodulation unit 3 (hereinafter, this operation will be referred to simply as GPS reception) to acquire the ephemeris data S2 (S2A, S2B, S2C, ...).

Before a lapse of four hours since the ephemeris data S2 is acquired and retained in the storing unit 9 (0:00), during which time the ephemeris data S2 is valid, the control unit 8 of the PND 1 can measure the current position of the vehicle in an extremely short time (such as three to five seconds or so) by using the ephemeris data S2 (hereinafter, this operation will be referred to as a hot start).

On the other hand, if more than four hours have elapsed since the ephemeris data S2 is retained in the storing unit 9, the control unit 8 of the PND 1 needs to acquire new ephemeris data S2 again because the valid time of the ephemeris data S2 has elapsed.

Since ephemeris data is transmitted from the GPS satellites at cycles of approximately 30 seconds, it takes at least approximately 30 seconds or more for the PND to reacquire the new ephemeris data S2. It thus takes at least approximately 30 seconds to 1 minute or so to reacquire the new ephemeris data S2 and measure the current position of the vehicle (hereinafter, this operation will be referred to as a warm start).

The above is the basic concept of the known measurement of the vehicle's current position using the ephemeris data S2. The result is that the hot start is inconveniently not always available to measure the current position of the vehicle.

In view of the foregoing, the PND 1 according to the embodiment of the present invention can use various methods to make a hot start whenever the user attempts to measure the current position of the vehicle. Description will be given below in due order.

### (4) Methods of Acquiring Ephemeris Data

In fact, the control unit 8 of the PND 1 is not always in the wakeup state but often enters the sleep state so as to suppress needless battery consumption when dismounted from the vehicle for use. The methods to take account of that point will be described.

Note that the sleep state of the PND 1 refers to that the storing unit 9 retaining the ephemeris data S2 and the timer activation unit 12 alone are in operation while the others including the control unit 8 are not.

### (4-1) Method of Acquiring Ephemeris Data Periodically

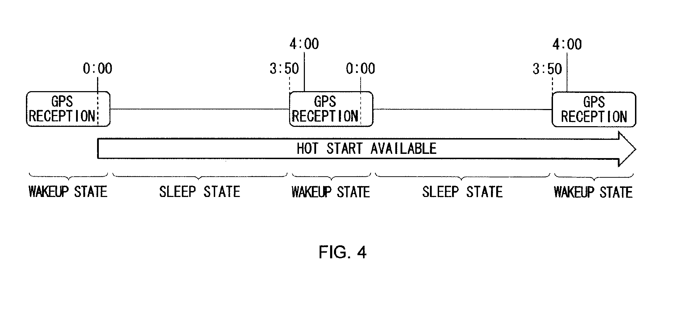

As shown in FIG. 4, the control unit 8 of the PND 1 once shifts from the wakeup state to the sleep state after the point (0:00) where the ephemeris data S2 (S2A, S2B, S2C, ...) is successfully acquired by GPS reception.

Here, the timer activation unit 12 (FIG. 2) of the PND 1 counts the valid time (4 hours, in this case) from the point (0:00) where the ephemeris data S2 (S2A, S2B, S2C, ...) is acquired successfully, and outputs a wakeup signal S12 to the control unit 8 at the point where 3 hours and 50 minutes have elapsed, which is 10 minutes before the valid time.

Based on the wakeup signal S12 supplied from the timer activation unit 12, the control unit 8 of the PND 1 activates itself and the entire PND 1 to enter the wakeup state, and attempts GPS reception again to reacquire new ephemeris data S2. Note that the wakeup state refers to a power saving state with the display unit 6 off, not an ordinary active state like when the power button is depressed. The PND 1 provides an LED indication to indicate the wakeup state.

After the reacquisition of the new ephemeris data S2, the control unit 8 of the PND 1 once resets the count of the timer activation unit 12. The control unit 8 shifts from the wakeup state to the sleep state again after the reset point (0:00) where the storing unit 9 is updated with the new ephemeris data S2.

The timer activation unit 12 of the PND 1 then counts the valid time (4 hours, in this case) again from the reset point (0:00) where the new ephemeris data S2 (S2A, S2B, S2C, ...) is acquired successfully, and outputs the wakeup signal S12 to the control unit 8 again at the point where 3 hours and 50 minutes have elapsed, which is 10 minutes before the valid time.

Based on the wakeup signal S12 supplied again from the timer activation unit 12, the control unit 8 of the PND 1 activates itself and the entire PND 1 to enter the wakeup state, and attempts GPS reception again to reacquire new ephemeris data S2. Subsequently, the foregoing procedure is repeated at every 3 hours and 50 minutes.

As described above, the PND 1 is not always in the wakeup state but enters the sleep state after the acquisition of the ephemeris data S2. The PND 1 automatically returns to the wakeup state 10 minutes before the expiration of the valid time of the ephemeris data S2, and acquires new ephemeris data S2 again.

Consequently, the PND 1 can reacquire new ephemeris data S2 at the point where 3 hours and 50 minutes have elapsed before a lapse of 4 hours which is the valid time of the ephemeris data S2 retained in the storing unit 9. A hot start is thus always available when the user attempts to measure the current position of the vehicle at any point in time.

Although the PND 1 is always capable of a hot start, the PND 1 will not maintain the wakeup state all the time but enter the sleep state after the ephemeris data S2 is acquired and retained in the storing unit 9. This can avoid increased power consumption of the built-in battery (not shown) when the PND 1 is dismounted from the vehicle and no power supply is available.

It should be noted that the control unit 8 of the PND 1 repeats reacquiring new ephemeris data S2 at the timing of every 3 hours and 50 minutes which is 10 minutes before the valid time. The timing is not limited thereto, however, and the control unit 8 may repeat reacquisition at various other timing such as one minute before and five minutes before.

### (4-2) Method of Acquiring Ephemeris Data Repeatedly at Predetermined Time Intervals

In this case, the PND 1 is set so that the timer activation unit 12 outputs the wakeup signal S12 to the control unit 8 at intervals of 10 minutes since 30 minutes before the lapse of 4 hours which is the valid time of the ephemeris data S2.

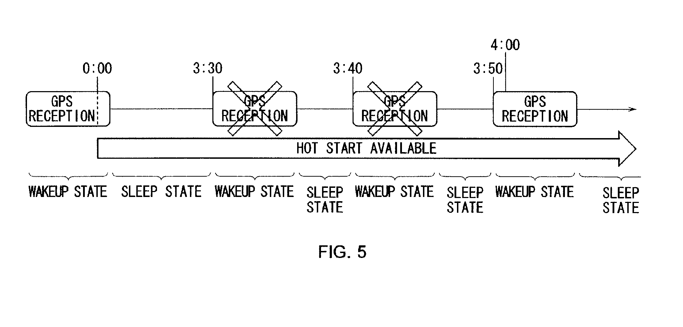

As shown in FIG. 5, the control unit 8 of the PND 1 once shifts from the wakeup state to the sleep state after the point (0:00) where the ephemeris data S2 (S2A, S2B, S2C, ...) is successfully acquired by GPS reception.

Here, the timer activation unit 12 (FIG. 2) of the PND 1 counts the valid time (4 hours, in this case) from the point (0:00) where the ephemeris data S2 (S2A, S2B, S2C, ...) is acquired successfully, and outputs the wakeup signal S12 to the control unit 8 at the point where 3 hours and 30 minutes have elapsed, which is 30 minutes before the valid time.

Based on the wakeup signal S12 supplied from the timer activation unit 12, the control unit 8 of the PND 1 activates itself and the entire PND 1 to enter the wakeup state, and then attempts GPS reception again to reacquire new ephemeris data S2. If the attempt fails, the control unit 8 immediately enters the sleep state again.

Possible reasons why the control unit 8 of the PND 1 fails to reacquire new ephemeris data S2 include such communication environment that the satellite signals S1 have a signal level too low to demodulate ephemeris data S2, and such communication environment that it is not possible to receive the satellite signals S1 at all.

Subsequently, the timer activation unit 12 of the PND 1 outputs the wakeup signal S12 to the control unit 8 again at the point where 3 hours and 40 minutes have elapsed, which is 10 minutes after the point where the wakeup signal S12 is output to the control unit 8 in the previous time.

Based on the wakeup signal S12 supplied again from the timer activation unit 12, the control unit 8 of the PND 1 activates itself and the entire PND 1 to enter the wakeup state again, and then attempts GPS reception again to reacquire new ephemeris data S2. If the attempt fails, the control unit 8 immediately enters the sleep state again.

The timer activation unit 12 of the PND 1 then outputs the wakeup signal S12 to the control unit 8 again at the point where 3 hours and 50 minutes have elapsed, which is 10 minutes after the point where the wakeup signal S12 is output to the control unit 8 in the previous time.

Based on the wakeup signal S12 supplied again from the timer activation unit 12, the control unit 8 of the PND 1 activates itself and the entire PND 1 to enter the wakeup state again, and attempts GPS reception again. If new ephemeris data S2 is reacquired successfully, the control unit 8 immediately enters the sleep state again.

As described above, with the ephemeris data S2 retained in the storing unit 9, the PND 1 automatically returns to the wakeup state to reacquire new ephemeris data S2 repeatedly at intervals of 10 minutes since 30 minutes before the expiration of the valid time of the ephemeris data S2 until the reacquisition succeeds.

Consequently, by attempting to reacquire new ephemeris data S2 at intervals of 10 minutes since 30 minutes before the expiration of the valid time, the PND 1 can avoid such situations that reacquisition fails after a lapse of 3 hours 50 minutes and the valid time of four hours elapses to require a warm start so that a hot start can always be made.

Although the PND 1 is capable of a hot start, the PND 1 will not maintain the wakeup state but enter the sleep state again by the next GPS reception 10 minutes later even if the acquisition of the ephemeris data S2 fails. This can avoid increased power consumption of the built-in battery (not shown) when the PND 1 is dismounted from the vehicle and no power supply is available.

The control unit 8 of the PND 1 attempts to reacquire new ephemeris data S2 automatically at intervals of 10 minutes since 30 minutes before the expiration of the valid time, whereas the intervals are not limited thereto. The attempt of the automatic reacquisition may be repeated at various other time intervals such as intervals of 5 minutes since 20 minutes before the expiration of the valid time.

### (4-3) Method of Acquiring Ephemeris Data Repeatedly at Decreasing Time Intervals

In this case, the PND 1 is set so that the timer activation unit 12 outputs the wakeup signal S12 to the control unit 8 at gradually decreasing time intervals such as 10 minutes, 2 minutes, and 1 minute since the point where 3 hours and 45 minutes have elapsed, which is 15 minutes before the lapse of the 4-hour valid time of the ephemeris data S2.

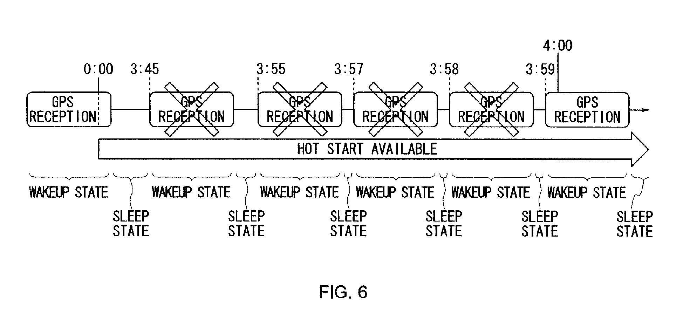

As shown in FIG. 6, the control unit 8 of the PND 1 once shifts from the wakeup state to the sleep state after the point (0:00) where the ephemeris data S2 (S2A, S2B, S2C, ...) is successfully acquired by GPS reception.

Here, the timer activation unit 12 (FIG. 2) of the PND 1 counts the valid time (4 hours, in this case) from the point (0:00) where the ephemeris data S2 (S2A, S2B, S2C, ...) is acquired successfully, and outputs the wakeup signal S12 to the control unit 8 at the point where 3 hours and 45 minutes have elapsed, which is 15 minutes before the valid time.

Based on the wakeup signal S12 supplied from the timer activation unit 12, the control unit 8 of the PND 1 activates itself and the entire PND 1 to enter the wakeup state, and attempts GPS reception again to reacquire new ephemeris data S2. If the attempt fails, the control unit 8 immediately enters the sleep state again.

Possible reasons why the control unit 8 of the PND 1 fails to reacquire new ephemeris data S2 include such communication environment that the satellite signals S1 have a signal level too low to demodulate ephemeris data S2, and such communication environment that it is not possible to receive the satellite signals S1 at all.

Subsequently, the timer activation unit 12 of the PND 1 outputs the wakeup signal S12 to the control unit 8 again at the point where 3 hours and 55 minutes have elapsed, which is 10 minutes after the point where the wakeup signal S12 is output to the control unit 8 in the previous time.

Based on the wakeup signal S12 supplied again from the timer activation unit 12, the control unit 8 of the PND 1 activates itself and the entire PND 1 to enter the wakeup state again, and then attempts GPS reception again to reacquire new ephemeris data S2. If the attempt fails, the control unit 8 immediately enters the sleep state again.

The timer activation unit 12 of the PND 1 then outputs the wakeup signal S12 to the control unit 8 again at the point where 3 hours and 57 minutes have elapsed, which is 2 minutes after the point where the wakeup signal S12 is output to the control unit 8 in the previous time.

Based on the wakeup signal S12 supplied again from the timer activation unit 12, the control unit 8 of the PND 1 activates itself and the entire PND 1 to enter the wakeup state again, and then attempts GPS reception again to reacquire new ephemeris data S2. If the attempt fails, the control unit 8 immediately enters the sleep state again.

The timer activation unit 12 of the PND 1 then outputs the wakeup signal S12 to the control unit 8 again at the point where 3 hours and 58 minutes have elapsed, which is 1 minute after the point where the wakeup signal S12 is output to the control unit 8 in the previous time.

Based on the wakeup signal S12 supplied again from the timer activation unit 12, the control unit 8 of the PND 1 activates itself and the entire PND 1 to enter the wakeup state again, and then attempts GPS reception again to reacquire new ephemeris data S2. If the attempt fails, the control unit 8 immediately enters the sleep state again.

The timer activation unit 12 of the PND 1 then outputs the wakeup signal S12 to the control unit 8 again at the point where 3 hours and 59 minutes have elapsed, which is 1 minute after the point where the wakeup signal S12 is output to the control unit 8 in the previous time.

Based on the wakeup signal S12 supplied from the timer activation unit 12 again, the control unit 8 of the PND 1 activates itself and the entire PND 1 to enter the wakeup state, and attempts GPS reception again. If new ephemeris data S2 is reacquired successfully, the control unit 8 immediately enters the sleep state again.

As described above, with the ephemeris data S2 retained in the storing unit 9, the PND 1 automatically returns to the wakeup state to reacquire new ephemeris data S2 repeatedly at gradually decreasing time intervals of 10 minutes, 2 minutes, and 1 minute since a lapse of 3 hours and 45 minutes which is 15 minutes before the expiration of the valid time of the ephemeris data S2, until the reacquisition succeeds.

Consequently, even if the PND 1 fails to reacquire new ephemeris data S2 at the point where 3 hours and 45 minutes have elapsed, the PND 1 can reacquire new ephemeris data S2 at gradually decreasing time intervals before the valid time of 4 hours elapses. This can avoid situations that require a warm start, and makes it possible to make a hot start anytime.

Although the PND 1 is capable of a hot start, the PND 1 will not maintain the wakeup state but repeat entering the sleep state over and over again by next GPS reception even if the acquisition of the ephemeris data S2 fails. This can avoid increased power consumption of the built-in battery (not shown) when the PND 1 is dismounted from the vehicle and no power supply is available.

It should be noted that the control unit 8 of the PND 1 attempts to reacquire new ephemeris data S2 automatically at gradually decreasing time intervals like 10 minutes, 2 minutes, and 1 minute since 15 minutes before the expiration of the valid time.

The time intervals are limited thereto, however, and the control unit 8 of the PND 1 may reacquire new ephemeris data S2 at time intervals that decrease in various other ways. For example, the control unit 8 may reacquire new ephemeris data S2 at gradually decreasing time intervals of 3 minutes, 2 minutes, 1 minute, and 30 seconds since 10 minutes before the expiration of the valid time.

### (4-4) Procedure of Ephemeris Data Acquisition Intermittent Operation Processing

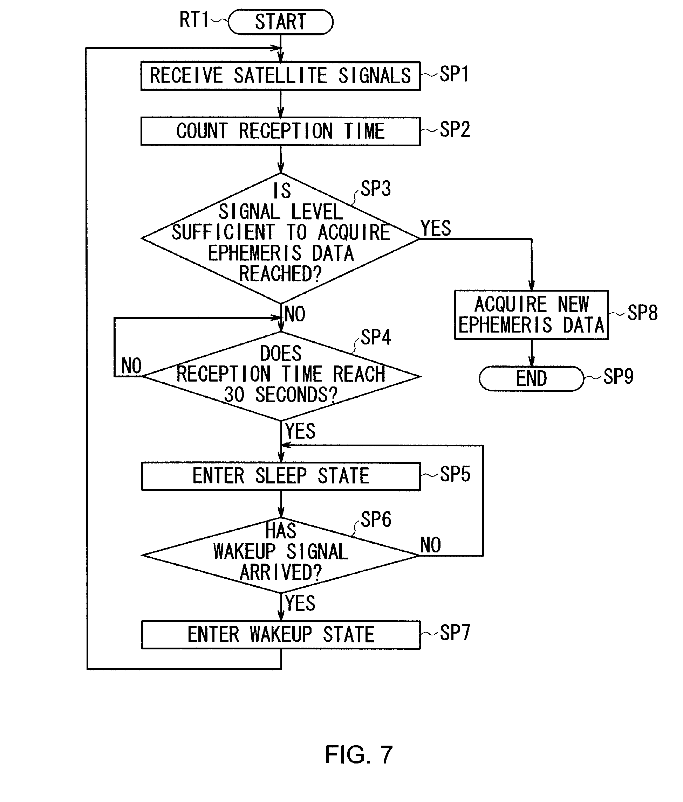

Next, referring to the flowchart of FIG. 7, description will be given of the procedure of ephemeris data acquisition intermittent operation processing, which pertains to operations in which the control unit 8 of the PND 1 starts up based on the wakeup signal S12 supplied from the timer activation unit 12 and then starts GPS reception to reacquire new ephemeris data S2.

The procedure of ephemeris data acquisition intermittent operation processing for the control unit 8 of the PND 1 to perform according to the flowchart of FIG. 7 is applied to: (4-1) the method of acquiring ephemeris data periodically; (4-2) the method of acquiring ephemeris data repeatedly at predetermined time intervals; and (4-3) the method of acquiring ephemeris data repeatedly at decreasing time intervals.

According to an application program, the control unit 8 of the PND 1 enters routine RT1 from the start step and proceeds to the next step SP1. At step SP1, the control unit 8 of the PND 1 starts up based on the wakeup signal S12 supplied from the timer activation unit 12. The control unit 8 then receives satellite signals S1 (S1A, S1B, S1C, ...) from a plurality of GPS satellites (satellite A, satellite B, satellite C, ...), and proceeds to the next step SP2.

At step SP2, the control unit 8 of the PND 1 counts the reception time from the start of reception of the satellite signals S1 (S1A, S1B, S1C, ...), and proceeds to the next step SP3.

At step SP3, the control unit 8 of the PND 1 determines whether or not the satellite signals S1 (S1A, S1B, S1C, ...) reach a signal level sufficient to acquire ephemeris data S2 according to a threshold that is set based on the past results of demodulation of the satellite signals S1 (S1A, S1B, S1C, ...).

If the result is positive, which indicates that the satellite signals S1 (S1A, S1B, S1C, ...) have a sufficient signal level and the satellite signals S1 (S1A, S1B, S1C, ...) can be demodulated to acquire ephemeris data S2, the control unit 8 of the PND 1 proceeds to the next step SP8.

At step SP8, the control unit 8 of the PND 1 demodulates the satellite signals S1 (S1A, S1B, S1C, ...) within a predetermined time to acquire ephemeris data S2 immediately, and proceeds to the next step SP9 to end the processing.

On the other hand, if the result at step SP3 is negative, which indicates that the satellite signals S1 (S1A, S1B, S1C, ...) have only a signal level insufficient to acquire ephemeris data S2 even after demodulation, the control unit 8 of the PND 1 proceeds to the next step SP4.

At step SP4, the control unit 8 of the PND 1 determines whether or not the reception time reaches 30 seconds with the satellite signal S1 (S1A, S1B, S1C, ...) insufficient to acquire ephemeris data S2 by demodulation.

If the result is negative, which indicates that the reception time has not yet reached 30 seconds since the start of reception of the satellite signals S1 (S1A, S1B, S1C, ...), the control unit 8 of the PND 1 returns to step SP4 to wait until the reception time reaches 30 seconds.

On the other hand, if the result at step SP4 is positive, which indicates that the satellite signals S1 (S1A, S1B, S1C, ...) are insufficient to acquire ephemeris data S2 even after demodulation and it is useless and a waste of power consumption to continue waiting any further, the control unit 8 of the PND 1 proceeds to the next step SP5.

At step SP5, the control unit 8 of the PND 1 forcefully shifts from the wakeup state to the sleep state, and proceeds to the next step SP 6. At step SP6, the control unit 8 of the PND 1 determines whether or not the next wakeup signal S12 has arrived from the timer activation unit 12.

If the result is negative, which indicates that the timing is yet to come for the timer activation unit 12 to perform the next GPS reception to acquire new ephemeris data S2, the control unit 8 of the PND 1 returns to step SP5 to continue the sleep state.

On the other hand, if the result at step SP6 is positive, which indicates that the timing has come for the timer activation unit 12 to perform the next GPS reception to acquire new ephemeris data S2, the control unit 8 of the PND 1 proceeds to the next step SP7.

At step SP7, the control unit 8 of the PND 1 shifts from the sleep state to the wakeup state based on the wakeup signal S12 from the timer activation unit 12, and returns to step SP1 and restarts to receive the satellite signals S1 (S1A, S1B, S1C, ...), repeating the subsequent processing.

Consequently, the control unit 8 of the PND 1 can prevent the power consumption of the built-in battery from being wasted by useless repetition of demodulation processing if the satellite signals S1 do not have a sufficient signal level when reacquiring new ephemeris data S2.

### (5) Method of Scheduling and Acquiring Ephemeris Data Adaptive to User Behavior

Aside from the foregoing methods by which the PND 1 reacquires new ephemeris data S2 in advance before the expiration of the valid time of the ephemeris data S2 so that the valid time may not expire, description will hereinafter be given of a method of acquiring the ephemeris data S2 in advance at timing tailored to an acting time zone (schedule) for the user to use the PND 1.

Specifically, the PND 1 by itself obtains a log of operating time zones where the PND 1 is in operation, and predicts the user's acting time zone in advance based on the log.

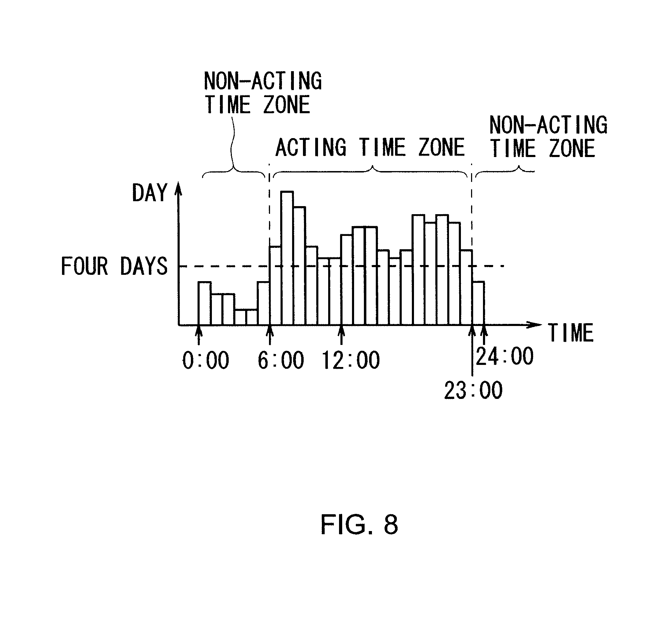

For example, as shown in FIG. 8, the control unit 8 of the PND 1 can previously identify hourly-based time zones out of 0:00 to 24:00 where the number of operating days exceeds a major part of seven days a week, i.e., four days as a typical acting time zone of the user, such as 6:00 to 23:00. The acting time zone is retained in the storing unit 9.

Consequently, the control unit 8 of the PND 1 sets the timer activation unit 12 so as to output the wakeup signal S12 one hour before 6:00 at which the user is likely to start measuring the current position by using the PND 1. The control unit 8 starts GPS reception to acquire new ephemeris data S2 in advance when activated based on the wakeup signal S12.

When the user turns on the power and attempts to measure the current position at 6:00, the control unit 8 of the PND 1 can thus make a hot start based on the ephemeris data S2 that has already been acquired one hour before, without starting GPS reception to acquire ephemeris data S2 again.

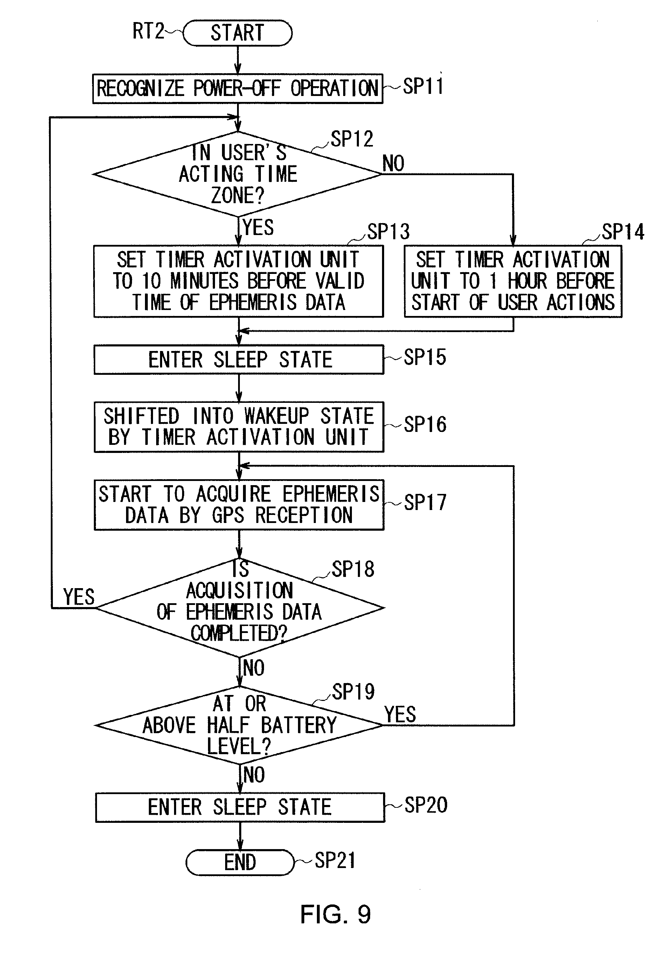

Such a procedure of scheduling acquisition processing of the ephemeris data S2, adaptive to user behavior will be described in detail with reference to the flowchart of the next FIG. 9.

In fact, according to an application program, the control unit 8 of the PND 1 enters routine RT2 from the start step and proceeds to step SP11. When the control unit 8 recognizes that a power-off operation is made on the PND 1, the control unit 8 proceeds to the next step SP12.

A concrete example of typical situations where a power-off operation is made is that the user comes home at night and dismounts the PND 1 from the vehicle with the power-off operation because the user will no longer use the PND 1.

At step SP12, the control unit 8 of the PND 1 determines whether or not the point in time when the power-off operation is made falls within the user's acting time zone (6:00 to 23:00) that is retained in the storing unit 9.

If the result is positive, which indicates that the point where the power-off operation is made falls within the user's acting time zone (6:00 to 23:00) and it is unknown when the user desires to measure the current position, the control unit 8 of the PND 1 proceeds to the next step SP13.

At step SP13, the control unit 8 of the PND 1 sets the timer activation unit 12 to output the wakeup signal S12 ten minutes before the valid time of the ephemeris data S2 in order to acquire new ephemeris data S2 periodically before a lapse of the four-hour valid time of the ephemeris data S2.

On the other hand, if the result at step SP12 is negative, which indicates that the point where the power-off operation is made is outside the user's acting time zone, the control unit 8 of the PND 1 proceeds to the next step SP14.

At step SP14, the control unit 8 of the PND 1 sets the timer activation unit 12 to output the wakeup signal S12 one hour before the predicted point of start of user actions such as 6:00 because the point when the power-off operation is made is outside the user's acting time zone. The control unit 8 thereby makes preparation to acquire new ephemeris data S2 in advance, and proceeds to the next step SP15.

At step SP15, the control unit 8 of the PND 1 enters the sleep state when it is not necessary to acquire ephemeris data S2 by GPS reception, regardless of whether or not within the user's acting time zone.

At step SP16, the control unit 8 of the PND 1 shifts from the sleep state to the wakeup state according to the wakeup signal S12 which is supplied from the timer activation unit 12 either 10 minutes before the valid time of the ephemeris data S2 as set at step SP13 or one hour before the predicted point of start of user actions. The control unit 8 then proceeds to the next step SP17.

At step SP17, the control unit 8 of the PND 1 enters the wakeup state and then starts GPS reception to acquire new ephemeris data S2. The control unit 8 then proceeds to the next step SP18.

At step SP18, the control unit 8 of the PND 1 determines whether or not the acquisition of the new ephemeris data S2 is completed. If the result is positive, which indicates that the acquisition of the new ephemeris data S2 is completed, the control unit 8 of the PND 1 returns to step SP12 to repeat the foregoing processing.

On the other hand, if the result at step SP18 is negative, which indicates that the acquisition of the new ephemeris data S2 is not yet completed despite a predetermined time or more has elapsed since the start of acquisition of the new ephemeris data S2 due to reasons such as deteriorated communication environment, the control unit 8 of the PND 1 proceeds to the next step SP19.

At step SP19, where the acquisition of the new ephemeris data S2 has started but not yet been completed, the control unit 8 of the PND 1 determines whether or not the remaining amount of the built-in battery is still higher than or equal to a half level.

If the result is positive, which indicates that the remaining amount of the built-in battery is higher than or equal to the half level and the acquisition of the new ephemeris data S2 can be continued without the possibility of dead battery, the control unit 8 of the PND 1 repeats the processing of step SP17 and subsequent steps.

On the other hand, if the result at step SP19 is negative, which indicates that the remaining amount of the built-in battery is not higher than nor equal to the half level and the battery may possibly run out when the processing of acquiring new ephemeris data S2 is continued on, the control unit 8 of the PND 1 proceeds to the next step SP20.

At step SP20, the control unit 8 of the PND 1 quits the processing of acquiring new ephemeris data S2, and forcefully shifts from the wakeup state to the sleep state to avoid the occurrence of dead battery. The control unit 8 then proceeds to the next step SP21 to end the processing.

As described above, the control unit 8 of the PND 1 performs the procedure of scheduling acquisition processing of ephemeris data S2 at routine RT2. The control unit 8 can thus acquire new ephemeris data S2 periodically when in the user's acting time zone, or acquire new ephemeris data S2 in advance one hour before the predicted point of start of user actions when not in the user's acting time zone.

Consequently, the PND 1 can schedule the procedure for acquiring new ephemeris data S2 on a round-the-clock basis so that a hot start is always available.

### (6) Operation and Effect

With the foregoing configuration, the control unit 8 of the PND 1 starts up and reacquires new ephemeris data S2 in advance based on the wakeup signal S12 from the timer activation unit 12 before the lapse of the valid time of the ephemeris data S2 retained in the storing unit 9. The control unit 8 can thus maintain the state that a hot start is always available.

The control unit 8 of the PND 1 will not always remain in the wakeup state to reacquire new ephemeris data S2, but shifts from the sleep state to the wakeup state based on the wakeup signal S12 at necessary timing. This can minimize the waste of power consumption.

The control unit 8 of the PND 1 forcefully shifts from the wakeup state to the sleep state if the satellite signals S1 (S1A, S1B, S1C, ...) do not reach a signal level sufficient to acquire new ephemeris data S2, or if the remaining amount of the built-in battery falls below the half level before the acquisition of new ephemeris data S2 is completed.

The control unit 8 of the PND 1 can thus suppress useless power consumption and prevent the occurrence of dead battery to endure long-hour operation when the PND 1 is not powered from the vehicle through the cradle unit 15, i.e., when used in a portable state.

According to the foregoing configuration, the control unit 8 of the PND 1 can measure the current position of the vehicle accurately in a short time in such a state that new ephemeris data S2 within the limit of the valid time is constantly retained in the storing unit 9, without requiring complicated operations of the user.

### (7) Other Embodiments

The foregoing embodiment has dealt with the case where the acquisition of new ephemeris data S2 by GPS reception is started at step SP17 of the procedure of scheduling acquisition processing of ephemeris data adaptive to user behavior (routine RT2).

However, the present invention is not limited thereto. At step SP17, the control unit 8 of the PND 1 may start to acquire new ephemeris data S2 via a predetermined server through the intermediary of wireless communication facilities (not shown) instead of starting to acquire new ephemeris data S2 by GPS reception.

The foregoing embodiment has also dealt with the case where if the remaining amount of the built-in battery is lower than the half level at step SP19 of the procedure of scheduling acquisition processing of ephemeris data S2 adaptive to user behavior (routine RT2), the control unit 8 proceeds to the next step SP20 and forcefully enters the sleep state.

However, the present invention is not limited thereto. The control unit 8 of the PND 1 may subsequently monitor the remaining amount of the built-in battery and repeat the processing of step SP12 and subsequent steps if the remaining amount of the built-in battery restores to or above the half level.

The foregoing embodiment has also dealt with the case where the PND 1 by itself obtains the log of the time zones where the PND 1 is in operation, predicts the user's acting time zone beforehand based on the result of aggregation of the log shown in FIG. 8, and acquires the ephemeris data S2 in advance according to the action time zone.

However, the present invention is not limited thereto. The control unit 8 of the PND 1 may calculate the results of aggregation of the log by holidays and by weekdays, predict the action time zone on holidays and the action time zone on weekdays independently, and acquire the ephemeris data S2 in advance depending on the acting time zone on holidays and the acting time zone on weekdays separately. The ephemeris data S2 may also be acquired in advance according to an action time zone that is previously entered by the user himself/herself.

The foregoing embodiment has also dealt with the case where the procedure of scheduling acquisition processing of ephemeris data at routine RT2 is performed to acquire new ephemeris data S2 periodically (FIG. 4) if in the user's acting time zone, or to acquire new ephemeris data S2 in advance one hour before the predicted point of start of user actions if not in the user's acting time zone.

However, the present invention is not limited thereto. When in the user's acting time zone, the control unit 8 of the PND 1 may acquire new ephemeris data S2 repeatedly at predetermined time intervals (FIG. 5) or acquire the ephemeris data S2 repeatedly at decreasing time intervals (FIG. 6) instead of acquiring the ephemeris data S2 periodically.

The foregoing embodiment has also dealt with the case where if the satellite signals S1 (S1A, S1B, S1C, ...) have a signal level sufficient to acquire new ephemeris data S2 at step SP3 of the procedure of intermittent operation processing at routine RT1, the control unit 8 proceeds to the next step SP8 to immediately acquire new ephemeris data S2 within a predetermined time.

However, the present invention is not limited thereto. If the satellite signals S1 (S1A, S1B, S1C, ...) have reached the signal level sufficient to acquire new ephemeris data S2 within a predetermined time, the control unit 8 of the PND 1 may extend the acquisition processing time for acquiring the new ephemeris data S2.

The foregoing embodiment has also dealt with the case where the control unit 8 of the PND 1 performs the foregoing procedure of intermittent operation processing at routine RT1 and the foregoing procedure of scheduling acquisition processing at routine RT2 according to the preinstalled application programs.

However, the present invention is not limited thereto. The control unit 8 of the PND 1 may perform the foregoing procedure of intermittent operation processing at routine RT1 and the foregoing procedure of scheduling acquisition processing at routine RT2 according to application programs that are installed from a predetermined recording medium, application programs that are downloaded over the Internet, or application programs that are installed through various other routes.

The foregoing embodiment has also dealt with the case where the PND 1 as a navigation apparatus includes the demodulation unit 3 as an acquisition unit, the storing unit 9 as a storing unit, the timer activation unit 12 as a time measuring unit, and the control unit 8 as a control unit. However, the present invention is not limited thereto. The navigation apparatus according to the embodiment of the present invention may be composed of an acquisition unit, storing unit, time measuring unit, and control unit of various other circuit configurations.

The navigation device and the method of acquiring ephemeris data according to the embodiment of the present invention may also be applied to various types of electronic apparatuses other than PND, such as a notebook personal computer, personal digital assistant (PDA), cellular phone, and portable game machine that have a GPS or other positioning unit.

The present application contains subject matter related to that disclosed in Japanese Priority Patent Application JP 2008-121481 filed in the Japan Patent Office on May 7, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A navigation apparatus comprising:
an acquisition unit for receiving a satellite signal from satellites and demodulates the satellite signal to acquire ephemeris data;
a storing unit for storing the ephemeris data;
a time measuring unit for measuring a valid time of the ephemeris data from timing of acquisition of the ephemeris data; and
a control unit for making the acquisition unit reacquire new ephemeris data before the valid time of the ephemeris data elapses in the time measuring unit.

2. The navigation apparatus according to claim 1, wherein
the control unit once enters a sleep state after the acquisition of the ephemeris data by the acquisition unit, and automatically starts up at reacquisition timing intended for the reacquisition so that the new ephemeris data is reacquired.

3. The navigation apparatus according to claim 1 or 2, wherein
when the reacquisition of the new ephemeris data fails, the control unit attempts the reacquisition of the new ephemeris data again at predetermined time intervals before the valid time of the ephemeris data elapses.

4. The navigation apparatus according to claim 2 or 3, wherein
the control unit repeats the reacquisition of the new ephemeris data at the predetermined time intervals until the reacquisition succeeds, the predetermined time intervals decreasing gradually.

5. The navigation apparatus according to any of claims 1 to 4, wherein
even having entered the sleep state after the acquisition of the ephemeris data by the acquisition unit, the control unit automatically starts up at the reacquisition timing to attempt the reacquisition of the new ephemeris data and enters the sleep state again when the satellite signal having a signal level sufficient to acquire the new ephemeris data is not available within a predetermined time.

6. The navigation apparatus according to any of claims 1 to 5, wherein
the control unit quits the reacquisition of the new ephemeris data when a remaining battery level falls to or below a predetermined level while the control unit is repeating the reacquisition at the predetermined time intervals until the reacquisition succeeds.

7. The navigation apparatus according to any of claims 1 to 6, wherein
the control unit acquires a log on operating time zones to predict a user's acting time zone, and makes the acquisition unit reacquire new ephemeris data in advance at a point in time before a predetermined time when the acting time zone starts.

8. A method of acquiring ephemeris data, comprising:
an acquisition step of receiving a satellite signal from satellites and demodulating the satellite signal to acquire ephemeris data by using an acquisition unit;
a storing step of storing the ephemeris data into a storing unit;
a time measuring step of measuring a valid time of the ephemeris data by using a time measuring unit from timing of acquisition of the ephemeris data; and
an ephemeris data reacquisition step of making a control unit reacquire new ephemeris data through the acquisition unit before the valid time of the ephemeris data elapses.
